# EUROPÄISCHE PATENTSCHRIFT

(11) **EP 2 138 327 B1**
(45) Veröffentlichungstag und Bekanntmachung des Hinweises auf die Patenterteilung: **27.03.2013**
(21) Anmeldenummer: 09158310.4
(22) Anmeldetag: 21.04.2009
(51) Int. Cl.: B60C 11/03, B60C 11/12

(54) **Laufflächenprofil für einen Fahrzeugluftreifen**
Tire tread for pneumatic tire
Bande de roulement pour pneumatique

(30) Priorität: 24.06.2008 DE 102008029659
(43) Veröffentlichungstag der Anmeldung: 30.12.2009
(73) Patentinhaber: Continental Reifen Deutschland GmbH, 30165 Hannover (DE)
(72) Erfinder: Lessmann, Kristina, 30827, Garbsen (DE)
(74) Vertreter: Finger, Karsten

(56) Entgegenhaltungen:
- WO-A-97/46359
- US-A- 5 415 215

## Beschreibung

Die Erfindung betrifft einen Fahrzeugluftreifen für den Einsatz unter winterlichen Fahrbedingungen mit einem Laufstreifen, welcher sich aus einem bei am Fahrzeug montierten Reifen fahrzeugaußenseitig gelegenen Außenabschnitt und einem Innenabschnitt zusammensetzt, welche Abschnitte sich strukturell voneinander unterscheiden, wobei der Innenabschnitt einen größeren Teil der Breite des Laufstreifens in der Bodenaufstandsfläche einnimmt als der Außenabschnitt und von diesem durch eine in Umfangsrichtung umlaufende Umfangsnut getrennt ist, wobei im Laufstreifenaußenabschnitt und im Laufstreifeninnenabschnitt zumindest je eine weitere, in Umfangsrichtung umlaufende Umfangsnut verläuft, wobei die Umfangsnuten Profilblockreihen voneinander trennen, und wobei die breiteste Umfangsnut im Innenabschnitt verläuft, wobei zumindest die breiteste Umfangsnut in Umfangsrichtung verlaufende, gerade Abschnitte aufweist, die in den axialen Richtungen abwechselnd gegeneinander um bis zur Hälfte ihrer Breite versetzt sind.

Ein Fahrzeugluftreifen der eingangs genannten Art ist beispielsweise aus der US-A-5,415,215 bekannt. Der gegenseitige Versatz der geraden Abschnitte in der Umfangsnut im Laufstreifen wird durch einen gegenseitigen Versatz der seitlich dieser Umfangsnut verlaufenden Profilblöcke erreicht.

Ein weiterer Fahrzeugluftreifen ist aus der DE-A-103 52 149 bekannt. Der Laufstreifen dieses Reifens ist derart ausgeführt, dass die Quernuten in der Schulterblockreihe des Außenabschnittes schmäler sind als jener in der Schulterblockreihe des Innenabschnittes. Dabei ist ferner die Breite der Schulterblockreihe im Außenabschnitt größer als jene der Schulterblockreihe im Innenabschnitt. Der gegenseitige Abstand der Einschnitte in den Blöcken der Schulterblockreihe des Außenabschnittes ist größer gewählt als der gegenseitige Abschnitt der Einschnitte in der Schulterblockreihe des Innenabschnittes. Die Einschnitte in den Blöcken der Schulterblockreihe des Außenabschnittes sind schmäler als die Einschnitte in den Blöcken der Schulterblockreihe des Innenabschnittes. Die Kombination dieser Maßnahmen soll dazu beitragen, den Außenabschnitt des Laufstreifens hinsichtlich der Handlingeigenschaften auf trockenen Straßen zu optimierten und im Laufstreifeninnenabschnitt im Vergleich zum Außenabschnitt eine deutlich weichere strukturelle Gestaltung vorzusehen, die hinsichtlich der Griffeigenschaften auf winterlichen und nassen Fahrbahnen optimiert ist.

Bei der Gestaltung eines Laufstreifens nimmt neben dem Verhältnis von Positivfläche zu Negativfläche in der Bodenaufstandsfläche auch die Verteilung der Negativflächen im Laufstreifen einen entscheidenden Einfluss auf verschiedene Eigenschaften, wie beispielsweise die Aquaplaningperformance oder die Wintereignung eines Reifens. Je mehr Negativanteil, insbesondere durch in Umfangsrichtung verlaufende Umfangsnuten, ein Laufstreifen aufweist, desto besser wird im Allgemeinen sein Aquaplaningverhalten, desto schlechter ist aber auch seine Winterperformance, insbesondere die Iceperformance. Der Grund dafür liegt im Verlust an Kontaktfläche zum Untergrund. Bei den in herkömmliche Weise mit in Umfangsrichtung gerade umlaufenden Umfangsnuten versehenen Laufstreifen ist die Iceperformance umso schlechter, je mehr Umfangsnuten der Laufstreifen aufweist.

Der Erfindung liegt die Aufgabe zugrunde, diesen Zielkonflikt zwischen einer guten Winter- bzw. Iceperformance und guten Aquaplaningeigenschaften zufriedenstellend zu lösen. Bei einer für das Aquaplaningverhalten vorteilhaften Anzahl von Umfangsnuten soll der Laufstreifen verbesserte Wintereigenschaften, insbesondere was die Iceperformance betrifft, aufweisen.

Gelöst wird die gestellte Aufgabe erfindungsgemäß dadurch, dass die geraden Abschnitte über vergleichsweise kurze Verbindungsabschnitte miteinander verbunden sind, welche gegenüber der Umfangsrichtung unter einem spitzen Winkel geneigt sind, wobei die axial nach außen geneigt verlaufenden Verbindungsabschnitte überwiegend von Profilblockflanken begrenzt sind, die der Umfangsrichtung zugeordnet sind, und wobei jeweils die Schnittstellen zwischen den Begrenzungen des Verbindungsabschnittes und jenen des angrenzenden geraden Abschnittes in Umfangsrichtung gegeneinander derart versetzt sind, dass die Verbindungsabschnitte keine gegenüber der Breite der geraden Abschnitte reduzierte Breite aufweisen.

Das Prinzip der Erfindung besteht daher darin, die Aquaplaningperformance durch eine weiterhin große Negativfläche der Umfangsnuten, insbesondere jener im Laufstreifeninnenabschnitt, zu erhalten und dabei gleichzeitig durch einen gegenseitigen axialen Versatz von Umfangsnutabschnitten gleichermaßen einen gegenseitigen Versatz der an diese Abschnitte angrenzenden Blöcke zu erreichen, wodurch der so genannte "Look Through" deutlich verringert wird. Ein geringer "Look Through" verbessert merkbar die Iceperformance des Laufstreifens.

Gemäß einer bevorzugten Ausführungsform der Erfindung weist die im Innenabschnitt des Laufstreifens der Schulterblockreihe benachbarte Umfangsnut in Umfangsrichtung einen wellenförmigen Verlauf auf. Durch diesen wellenförmigen Verlauf wird auch bei dieser Umfangsnut der "Look Through" verringert, wobei das Ausmaß des gegenseitigen Versatzes der einzelnen Wellenberge und Wellentäler analog zum Versatz der Umfangsnutabschnitte der breitesten Umfangsnut gewählt werden kann.

Sowohl im Laufstreifeninnenabschnitt als auch im Laufstreifenaußenabschnitt sind ferner die im Laufstreifenmittelbereich verlaufenden Umfangsnuten jeweils breiter als die der jeweiligen Schulterblockreihe benachbart verlaufende Umfangsnut. Das Verhältnis der Breite der jeweils im Laufstreifenmittelbereich verlaufenden Umfangsnut zu der zugehörigen der Schulterblockreihe benachbart verlaufenden Umfangsnut sollte zwischen 1 : 1,25 bis 1 : 1,4 betragen. Auch durch diese Maßnahme wird dem höheren Staudruck im Bereich der Laufstreifenmitte Rechnung getragen und das Aquaplaningniveau verbessert.

Die breiteste Umfangsnut im Laufstreifeninnenabschnitt wird ferner derart ausgelegt, dass sie Verbindungsabschnitte aufweist, die zu Quernuten weisen, welche zwischen den Blöcken der laufstreifenaußenseitig an diese Umfangsnut angrenzenden Blockreihe verlaufen. Auf diese Weise wird Wasser, welches durch die breiteste Umfangsnut strömt, auf die Spitzen der Blöcke in der laufstreifenaußenseitig an diese Umfangsnut angrenzende Blockreihe geleitet und die Wasserströmung aufgeteilt. Dies bewirkt Entlastung des in der Laufstreifenmitte sonst sehr hohen Straudruckes.

Eine weitere Maßnahme, welche die Wasserableitung zur Laufstreifenaußenseite unterstützt, besteht darin, dass jeweils zwei Blöcken der Schulterblockreihe ein Block der benachbarten mittleren Blockreihe zugeordnet ist, wobei zumindest jede zweite Quernut aus dieser Blockreihe in einer Quernut zur laufstreifeninnenseitig angrenzenden zentralen Blockreihe Fortsetzung findet.

Eine zusätzliche Entlastung des Staudruckes sowie eine Unterstützung der Wasserableitung zur Laufstreifenaußenseite wird dadurch erreicht, dass in den miteinander fluchtend angeordneten Quernuten der mittleren und der zentralen Blockreihe rampenförmige Anhebungen vorgesehen sind, welche jeweils an den einen benachbarten Block angebunden sind und vom anderen benachbarten Block durch einen Einschnitt getrennt sind. Die einseitige Anbindung der rampenförmigen Anhebungen Blöcke ist beim Bremsen von Vorteil, da sie in Umfangsrichtung versteifend wirkt.

In diesen Quernuten bleibt ausreichend Volumen für eine effektive Wasserableitung erhalten, wenn sich die Höhe der rampenförmigen Anhebungen in axialer Richtung nach außen zu verringert, wobei die rampenförmigen Anhebungen in den Quernuten der mittleren Blockreihe eine Fortsetzung der rampenförmigen Anhebungen in den Quernuten der zentralen Blockreihe darstellen. In diesem Zusammenhang ist es auch von Vorteil, wenn die rampenförmigen Anhebungen in den Quernuten der zentralen Blockreihe ihre größte Höhe in einem vom Nutgrund gemessenen Abstand von 50% bis 70% der Profiltiefe aufweisen und wenn ferner die rampenförmigen Anhebungen in den Quernuten der mittleren Blockreihe am Grund der Quernuten enden beziehungsweise auslaufen.

Weitere Merkmale, Vorteile und Einzelheiten der Erfindung werden anhand der Zeichnung, die Ausführungsbeispiele darstellt, näher beschrieben. Dabei zeigen
Fig. 1 eine Draufsicht auf einen Abschnitt einer Abwicklung eines erfindungsgemäßen Laufstreifens,
Fig.1a einen Schnitt entlang der Linie D-D der Fig.1,
Fig. 1b einen Schnitt entlang der Linie K-K der Fig. 1,
Fig. 1c einen Schnitt entlang der Linie E-E der Fig. 1,
Fig. 1d einen Schnitt entlang der Linie F-F der Fig. 1,
Fig. 1e einen Schnitt entlang der Linie G-G der Fig. 1,
Fig. 1f einen Schnitt entlang der Linie H-H der Fig. 1,
Fig. 1g einen Schnitt entlang der Linie L-L der Fig. 1,
Fig. 2 eine Schnittdarstellung eines Einschnittes
Fig. 3 eine Draufsicht auf einen Einschnitt aus Fig. 1

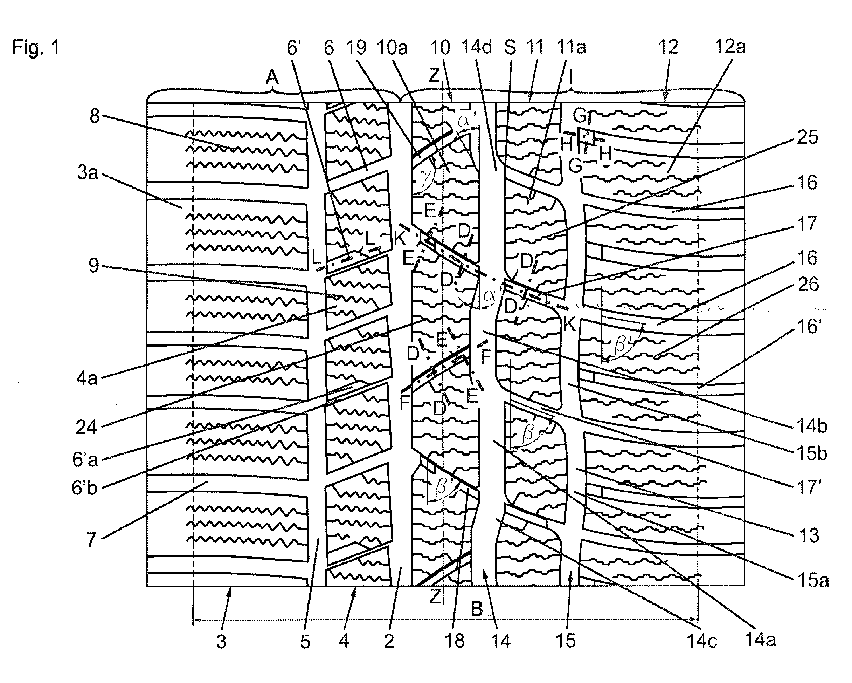

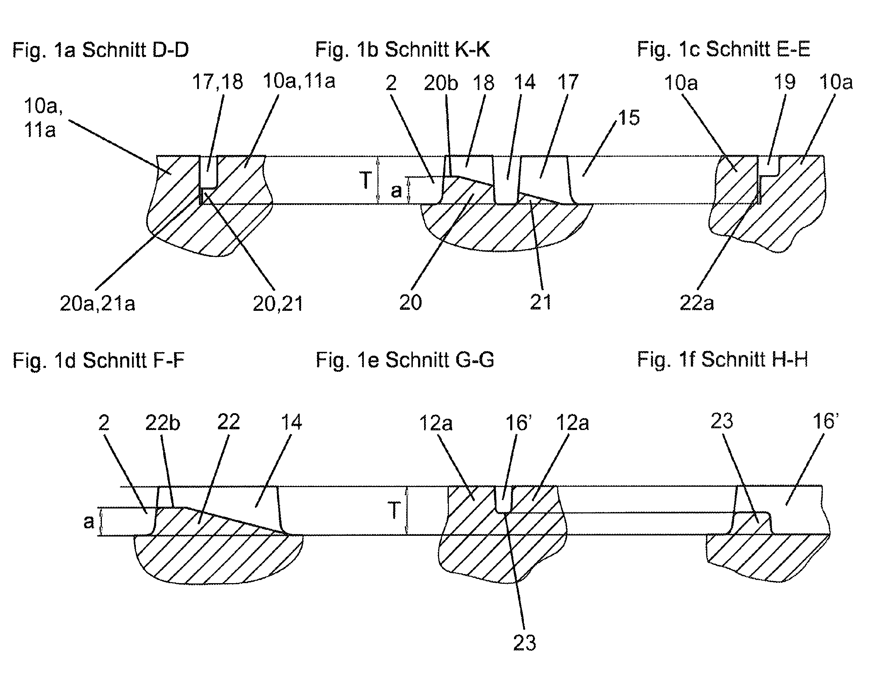

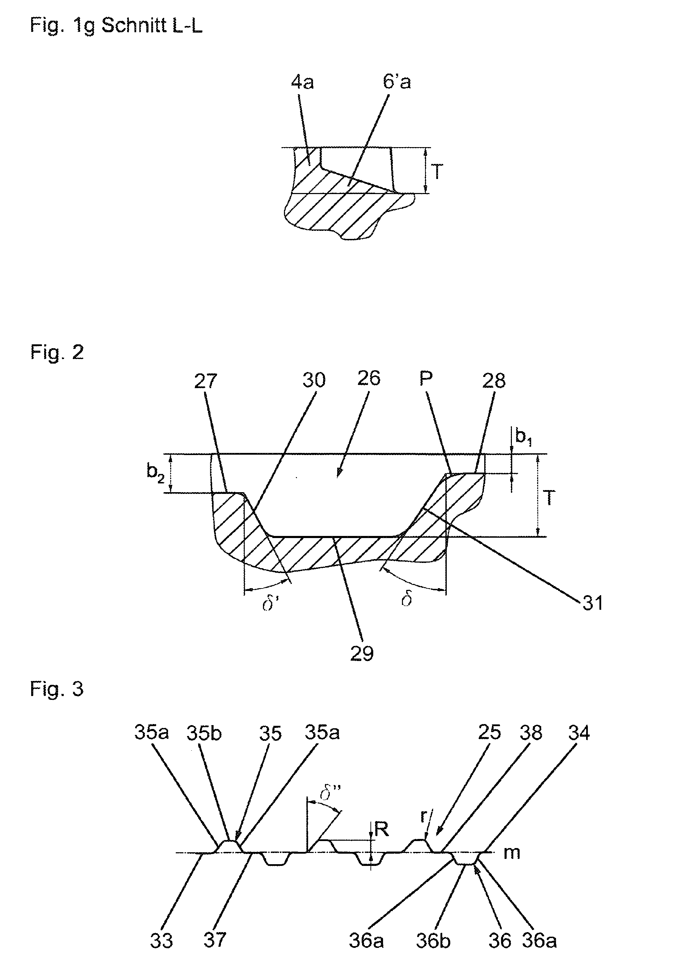

Der in Fig.1 dargestellte Laufstreifen wird über eine Breite B, welche der Breite des Reifens in der Bodenaufstandsfläche beim Abrollen entspricht, betrachtet. Der Laufstreifen 1 ist in axialer Richtung in zwei strukturell unterschiedliche Abschnitte, einen Außenabschnitt A und einen Innenabschnitt I, geteilt und daher ein sogenannter "asymmetrischer" Laufstreifen. Der Außenabschnitt A umfasst jenen Bereich des Fahrzeugluftreifens, welcher bei am Fahrzeug montierten Reifen an der Fahrzeugaußenseite liegt. Der funktionale Schwerpunkt des Außenabschnittes A liegt bei den Handlingeigenschaften des Reifens auf trockenen Fahrbahnen, die funktionalen Schwerpunkte des Innenabschnittes I sind Winterperformance und Aquaplaningeigenschaften.

Bei der gezeigten Ausführungsvariante ist die Grenze zwischen dem Außenabschnitt A und dem Innenabschnitt I durch eine Umfangsnut 2 gebildet, welche gegenüber der Äquatorebene Z-Z in Richtung der Schulter im Außenabschnitt A versetzt ist. Der Laufstreifenaußenabschnitt nimmt daher weniger als 50 % der Laufstreifenbreite ein, insbesondere erstreckt sich der Laufstreifenaußenabschnitt A über 30% bis 45% der Laufstreifenbreite B. Die Profilpositive im Außenabschnitt A sind durch Blöcke 3a einer Schulterblockreihe 3 und Blöcke 4a einer dieser benachbart verlaufenden Blockreihe 4 gebildet. Zwischen der Schulterblockreihe 3 und der Blockreihe 4 verläuft eine weitere, in Umfangrichtung umlaufende Umfangsnut 5. Die beiden Umfangsnuten 2 und 5 sind im Wesentlichen in der Umfangsrichtung gerade umlaufende Nuten, welche bei den gezeigten Ausführungsvarianten unterschiedliche Breiten aufweisen, wobei die schulterseitig gelegene Umfangsnut 5 die schmälere ist.

Der Laufstreifen 1 ist in Folge der Anordnung der Quernuten im Innen- und Außenabschnitt I, A laufrichtungsgebunden ausgeführt. Im Außenabschnitt A sind zwischen den einzelnen Blöcken 4a der Blockreihe 4 abwechselnd Quernuten 6, 6'vorgesehen sind. Die Quernuten 6, 6' verlaufen unter einem im Wesentlichen gleichgroßen Winkel α zur Umfangsrichtung, welcher in der Größenordnung von 45° bis 80° beträgt. Bei der gezeigten Ausführung beträgt α etwa 70°. Die Quernuten 6 verlaufen gerade und weisen eine konstante Breite in der Größenordnung von 2 mm bis 3 mm auf. Die abwechselnd mit den Quernuten 6 vorgesehenen Quernuten 6' weisen an die Umfangsnut 5 anschließend und über etwa zwei Drittel ihrer Länge rampenförmige Anhebungen 6'a auf, die jeweils im Profilblock 4a eine Einbuchtung erzeugen. Wie der Schnitt in Fig. 1g zeigt, weisen die rampenförmigen Anhebungen 6'a ihre größte radiale Höhe von 50% bis 70% der Profiltiefe T an ihren laufstreifeninnenseitigen Enden auf, ihre Höhe verringert sich kontinuierlich in Richtung Umfangsnut 5 etwa bis auf das Niveau des Nutgrundes der Nut 5. Einschnitte 6'b einer Breite von 1 bis 2 mm verlaufen über die gesamte Erstreckung der Quernuten 6' und sind insbesondere in der Profiltiefe T ausgeführt. Die Schulterblöcke 3 sind voneinander durch Quernuten 7 getrennt, die im Wesentlichen in Laufstreifenquerrichtung verlaufen und einen leicht bogenförmigen Verlauf aufweisen. Den Quernuten 7 ist abwechselnd eine Quernut 6 und eine Quernut 6' aus der Blockreihe 4 zugeordnet. Auf dieser Weise sind die Blöcke 3a und 4a, jeweils gemeinsam mit einer benachbarten Quernut 7 und 6 beziehungsweise 6' in Umfangsrichtung aufeinander folgende Profilabschnitte, sogenannte Pitches, gegliedert, wobei die Pitches in unterschiedlichen Umfangslängen, beispielsweise zwei unterschiedlichen Umfangslängen, vorgesehen sind. Die unterschiedlichen Umfangslängen sind aus Fig. 1 ersichtlich, die Blöcke 3a und 4a weisen unterschiedliche Umfangserstreckungen auf. Diese Maßnahme dient bekannterweise zur Optimierung bzw. Verringerung des Abrollgeräusches. Die Gesamtpitchanzahl über den Laufstreifenumfang ist im Laufstreifenaußenabschnitt A geringer als im Laufstreifeninnenabschnitt I, auf den später näher eingegangen wird. Im Laufstreifenaußenabschnitt A beträgt die Gesamtpitchanzahl insbesondere zwischen 70 und 80.

Sämtliche Profilblöcke 3a, 4a sind jeweils mit einer Anzahl von im Wesentlichen in Laufstreifenquerrichtung verlaufenden Einschnitten 8, 9 versehen. Die Einschnitte 8, 9 weisen eine Breite von 0,4 mm bis 0,6 mm und eine Tiefe von mindestens 1,5 mm auf. Bei der dargestellten Ausführungsform sind die Einschnitte 8, 9 in Draufsicht zickzackförmig ausgeführt.

Im Laufstreifeninnenabschnitt I verlaufen über den Reifenumfang drei Blockreihen 10, 11 und 12, die voneinander durch weitere Umfangsnuten 14, 15 getrennt sind. Die Schulterblockreihe 12 besteht aus Einzelblöcken 12a und Quernuten 16, 16', die der Schulterblockreihe 12 benachbarte mittlere Blockreihe 11 setzt sich aus Blöcken 11a und Quernuten 17, 17' zusammen, wobei jeweils zwei Blöcken 12a aus der Schulterblockreihe 12 ein Block 11a aus der mittleren Blockreihe 11 zugeordnet ist. Jede Quernut 16 aus der Schulterblockreihe 12 findet ihre Fortsetzung in einer der abwechselnd vorgesehenen Quernuten 17, 17' der mittleren Blockreihe 11. Die Quernuten 16, 16'und 17, 17' weisen jeweils einen leicht bogenförmigen Verlauf auf, derart, dass die Quernuten 17, 17' unter einem Winkel β in der Größenordnung von 45° bis 80° zur Umfangsrichtung und die Quernuten 16, 16' unter einem Winkel β' zur Umfangsrichtung verlaufen, wobei β' geringfügig größer ist als der Winkel β und maximal 85° beträgt. Die Neigung der Quernuten 17, 17' und 16, 16' gegenüber der Umfangsrichtung ist gegensinnig zur Neigung der Quernuten 6 und 6', die im Laufstreifenaußenabschnitt A verlaufen.

Die dritte, entlang des Reifenäquators Z-Z verlaufende Blockreihe 10 weist ebenfalls halb so viele Blöcke 10a auf wie die Schulterblockreihe 12. Jede Quernut 17 aus der mittleren Blockreihe 11 findet eine Fortsetzung als Quernut 18 in der zentralen Blockreihe 10, sodass die Quernuten 18 gemeinsam mit Quernuten 17 und 16 einen kontinuierlichen, leicht bogenförmigen Verlauf aufweisen. Der Winkel β'', den die Quernuten 18 mit der Reifenumfangsrichtung einschließen, ist geringfügig kleiner als der Winkel β und beträgt bis zu 85°. Zwischen benachbarten Quernuten 18 befinden sich jeweils zwei Blöcke 10a, die voneinander durch eine weitere Quernut 19 getrennt sind, welche bezüglich der Umfangsrichtung gegensinnig zu den Quernuten 18 geneigt ist. Der Neigungswinkel γ der Quernuten 19 beträgt zwischen 95° und 135°.

Im Innenabschnitt I orientiert sich die maßgebliche Pitchanzahl an der Anzahl der Pitches beziehungsweise der Anzahl der Blöcke 12a in der Schulterblockreihe 12. Das Verhältnis der Pitchanzahl im Außenabschnitt A zur Pitchanzahl im Innenabschnitt I beträgt zwischen 1:1,25 bis 1:1,3. Gemäß einer bevorzugten Ausführungsform der Erfindung ist dabei die größte Umfangslänge eines Blocks 12a aus der Schulterblockeihe12 im Innenabschnitt I gleich groß wie die kleinste Umfangslänge eines Blockes 3a aus der Schulterblockreihe 3 des Außenabschnittes A. Diese Maßnahme trägt zu einer gleichmäßigen Druckverteilung in der Bodenaufstandsfläche bei.

Die breiteste Umfangsnut des Laufstreifens 1 ist die Umfangsnut 14 zwischen der zentralen Blockreihe 10 und der mittleren Blockreihe 11 des Innenabschnittes I, deren Breite in der Größenordnung von 9 mm bis 12 mm beträgt. Die Umfangsnut 14 weist in Umfangsrichtung verlaufende gerade Nutabschnitte 14a, 14b auf, die in axialer Richtung abwechselnd in Richtung der einen und der anderen Reifenschulter und gegeneinander geringfügig, um mindestens ein Fünftel und höchstens bis zur Hälfte der Breite der Umfangsnut 14, versetzt sind. Die Abschnitte 14a und 14b verlaufen dabei im Wesentlichen entlang der in Umfangsrichtung orientierten Blockflanken der Blöcke 11a der mittleren Blockreihe 11. Die Umfangsabschnitte 14a, 14b der Umfangsnut 14 sind durch zur Umfangsrichtung unter einem Winkel α' von bis zu 40° geneigte Verbindungsabschnitte 14c, 14d miteinander verbunden. Die in einer Breite von etwa 6 mm bis 8 mm ausgeführte Umfangsnut 15 weist einen leicht wellenförmigen Verlauf mit abwechselnd aufeinander folgenden Abschnitten 15a und 15b auf, welche analog zu den Abschnitten 14a, 14b der Umfangsnut 14 in axialer Richtung gegeneinander um bis zur Hälfte ihrer Breite versetzt sind. Die spezielle Ausgestaltung der beiden Umfangsnuten 14 und 15 ist mit dem Vorteil verbunden, dass die Umfangsnuten 14, 15 mit einer vergleichsweise großen Negativfläche versehen werden können, was für die Aquaplaningperformance beziehungsweise das Wasserdrainagevermögen des Laufstreifen 1 besonders günstig ist. Gleichzeitig wird durch die versetzten Abschnitte 14a, 14b beziehungsweise 15a, 15b in Umfangsrichtung der sogenannte "Look Through" verringert, wodurch sich der Kontaktbereich zwischen dem Laufstreifen und der Fahrbahnoberfläche vergrößert, was die Iceperformance des Laufstreifens verbessert, da durch den Versatz der Abschnitte 14a, 14b, und 15a, 15b der Druck in der Bodenaufstandsfläche gleichmäßiger verteilt wird. Jeder Verbindungsabschnitt 14d ist in Richtung einer Quernut 17' geneigt und mündet in diese. Die Spitzen S der Blöcke 11a der mittleren Blockreihe 11 werden somit von Wasser in den Verbindungsabschnitten 14d derart angeströmt, dass das Wasser über die Quernuten 17 und die an diese anschließenden Quernuten 16 in der Schulterblockreihe 12 nach außen transportiert wird. Darüber hinaus sorgen die ab der Laufstreifenmitte kontinuierliche Drainagekanäle bildenden Quernuten 18, 17 und 16 für eine Wasserableitung ab der Laufstreifenmitte in Richtung Innenschulter und hier nach außen.

Die im Laufstreifenmittelbereich verlaufenden Umfangsnuten 2 und 14 sind breiter als die bei den Schulterbereichen verlaufenden Umfangsnuten 5 und 15. Das Verhältnis der Breite der Umfangsnut 2 zur Breite der Umfangsnut 5 und das Verhältnis der Breite der Umfangsnut 14 zur Breite der Umfangsnut 15 beträgt jeweils zwischen 1:1,25 bis 1:1,4.

Durch diese Maßnahme wird dem höheren Staudruck in der Laufstreifenmitte Rechnung getragen und ebenfalls das Wasserdrainagevermögen des Laufstreifens verbessert.

Fig. 1a und 1b zeigen Schnitte durch die miteinander fluchtenden Quernuten 17 und 18, Fig. 1a einen Querschnitt durch die Quernuten 17 und 18 und Fig. 1b einen Längsschnitt durch die Quernuten 17, 18. Die Quernuten 17 und 18 weisen jeweils eine rampenförmige Anhebung 20, 21 auf, welche jeweils an einen Block 10a beziehungsweise 11a aus der jeweiligen Blockreihe 10 beziehungsweise 11 angebunden sind, wobei zwischen den Anhebungen 20, 21 und den zweiten Blöcken 10a beziehungsweise 11a ein schmaler etwa 0,5 mm bis 1 mm breiter Einschnitt 20a, 21 a ausgebildet ist, welcher in radialer Richtung bis auf die vorgesehene Profiltiefe reicht. Der in Fig.1b gezeigte mittige Schnitt durch die rampenförmigen Anhebungen 20 und 21 zeigt, dass die Anhebung 20 vorerst bei der Umfangsnut 2 über einen kurzen Abschnitt ein parallel zur Profilaußenseite verlaufendes Plateau 20b bildet, welches sich vom Nutgrund der Umfangsnut 2 aus betrachtet in einem Abstand a von 50% bis 70% der Profiltiefe T befindet. Von diesem Plateau 20b ausgehend verringert sich die Höhe der rampenförmigen Anhebungen 20, 21 kontinuierlich bis auf den Grund der Quernut 17, wobei die rampenförmige Anhebung 21 eine Fortsetzung der rampenförmigen Anhebung 20 darstellt, derart, als wäre die dazwischen befindliche Umfangsnut 14 nicht vorhanden. Die rampenförmige Anhebung 21 endet am Grund der Quernut 17 in einem Abstand von der Umfangsnut 15 von etwa einem Viertel der Erstreckungslänge der Quernut 17.

Die Schnittdarstellungen in Fig. 1c und Fig. 1d zeigen die in den Quernuten 19 der zentralen Blockreihe 10 vorgesehenen rampenförmige Anhebungen 22. Der in Fig. 1c gezeigte Querschnitt durch eine Quernut 19 zeigt, dass die rampenförmige Anhebung 22 an den einen Block 10a angebunden ist und vom zweiten Block 10a durch einen schmalen etwa 0,5 mm bis 1 mm breiten Einschnitt 22a, dessen Tiefe der Profiltiefe T entspricht, getrennt ist. Bei der Umfangsnut 2 weist die rampenförmige Anhebung 22 vorerst ein Plateau 22b auf, welches sich über etwa ein Viertel bis ein Fünftel der Längserstreckung der Quernut 19 erstreckt. Die vom Nutgrund der Umfangsnut 2 gemessene Höhe a des Plateaus 22b beträgt zwischen 50% und 70% der Profiltiefe T. Zwischen dem Plateau 22b und der Umfangsnut 14 wird die Höhe der rampenförmigen Anhebung 22 kontinuierlich geringer, wobei die rampenförmige Anhebung 22 am Nutgrund der Quernut 19 endet beziehungsweise ausläuft.

Fig. 1e und Fig. 1f zeigen Schnitte durch eine der Quernuten 16' in der Schulterblockreihe 12. In den Quernuten 16' befindet sich über einen kurzen Abschnitt und unmittelbar der Umfangsnut 15 benachbart jeweils eine Anhebung 23, welche an beide benachbarte Blöcke 12a angebunden ist und eine konstante Höhe in der Größenordnung von 30% bis 60% der Profiltiefe T aufweist. Diese Anhebung 23 erstreckt sich über eine Länge von 6 mm bis 8 mm.

In sämtlichen Blöcken 10a, 11a und 12a der Blockreihen 10, 11, 12 des Laufstreifeninnenabschnittes I ist jeweils eine Anzahl von zumindest im Wesentlichen in Laufstreifenquerrichtung verlaufenden Einschnitten 24, 25 und 26 vorgesehen. Die Einschnitte 24, 25 und 26 weisen in Draufsicht einen besonderen Verlauf auf, der als eine von einer Treppenform überlagerte Wellenform betrachtet werden kann. Auf die Besonderheiten der Einschnitte 24, 25 und 26 wird weiter unten näher eingegangenen.

Zumindest in den Einschnitten 26 der Schulterblöcke 12a ist ein spezielles Einschnittanhebungskonzept vorgesehen, welches im Folgenden anhand der Fig. 2 näher erläutert wird. Fig. 2 zeigt einen radialen "Schnitt" durch einen Einschnitt 26, wobei der Einfachheit halber die Wellen- und Treppenstruktur des Einschnittes 26 nicht wiedergegeben ist, sodass quasi die Projektion des Einschnittes auf seine Schnittebene gezeigt ist. Das Einschnittanhebungskonzept lässt sich grundsätzlich auch bei Einschnitten realisieren, die gerade verlaufen oder eine herkömmliche Zickzack- oder Wellenform aufweisen. Der Einschnitt 26 weist angehobene Endabschnitte 27, 28 und zwischen diesen einen vorzugsweise auf Profiltiefe T ausgeführten Grundabschnitt 29 auf. Der Grundabschnitt 29 erstreckt sich über 40% bis 70% der Einschnittserstreckung, welche die Länge des Einschnittes 26 in seiner Projektion auf seine radiale Schnittebene in Erstreckungsrichtung ist. Der angehobene Abschnitt 27 verläuft über 10% bis 20% und der angehobene Abschnitt 28 über 15% bis 20% der Einschnitterstreckung. Die Abschnitte 27, 28 befinden sich auf bestimmten, insbesondere konstanten Höhen, wobei sich der Abschnitt 28 in einem Abstand b₁ von 20% bis 25% der Profiltiefe T von der Profilaußenfläche und der Abschnitt 27 in einem Abstand b₂ von 30% bis 50% der Profiltiefe T von der Profilaußenfläche befindet. Zwischen den Abschnitten 27, 28 und dem Grundabschnitt 29 verlaufen zur radialen Richtung geneigte Verbindungsflanken 30, 31. Die Verbindungsflanke 31 zwischen dem Abschnitt 28 und dem Grundabschnitt 29 verläuft unter einem Winkel δ zur radialer Richtung, welcher kleiner gleich 45° ist, die Verbindungsflanke 30 zwischen dem Abschnitt 27 und dem Grundabschnitt 29 verläuft unter einem Winkel δ' zur radialen Richtung, welcher größer gleich 10° beträgt. Der Winkel δ ist jedenfalls größer als der Winkel δ', wobei im Wesentlichen δ = δ' x 4/3 gilt. Ist nun der Laufstreifen 1 um das Ausmaß b₁ abgerieben, dann verstärkt sich das Moment um den in Fig. 2 eingezeichnete Stelle P an der Schnittstelle zwischen dem Abschnitt 28 und der Flanke 31, da sich der Einschnitt 26 an diesem Bereich nicht mehr bewegen kann. Der größere Winkel δ reduziert die Belastung, die in P einwirkt und die durch das Moment - hervorgerufen durch den Schlupf beim Abrollen - erzeugt wird. Je größer δ ist, umso größer muss auch δ' sein, wodurch sich auch der Abstand zwischen der Blockkante und dem Anfang des Einschnittgrundes vergrößert. Der größere Winkel δ ermöglicht eine Beibehaltung einer guten Winterperformance, da sich die Flanke 31 über eine größere Länge erstreckt als die Flanke 30. Ein ungleichmäßiges Abreiben der einzelnen Blöcke wird somit reduziert. Darüber hinaus wird die Gefahr des Bildens von Einrissen am Übergang der Flanken 30, 31 in den angehobenen Abschnitt 27, 28 herabgesetzt, da sich die Belastung durch das erwähnte Moment jetzt nicht mehr auf den gleichen Punkt (Punkt P) auswirkt. Derart ausgeführte Einschnitte 26 können in beliebigen Profilelementen bzw. Profilblöcken eines Laufstreifens vorgesehen sein.

Die spezielle Treppen-/Wellenform der Einschnitte 24, 25 und 26 wird im Folgenden anhand der Fig. 3, die beispielhaft einem Einschnitt 25 in Draufsicht zeigt, näher erläutert. Die punktierte Linie kennzeichnet die Mittelachse m beziehungsweise die Mittellinie des Einschnittes 25. Der Einschnitt 25 weist zwei entlang der Mittelachse m verlaufende kurze Endabschnitte 33, 34 auf. Vom Endabschnitt 33 ausgehend ist ein Wellenberg 35 auf der einen Seite der Mittelachse m ausgebildet, vom Endabschnitt 34 ein Wellenberg 36 auf die andere Seite der Mittelachse m. Die beiden Flanken 35a, 36a der Wellenberge 35, 36 verlaufenden gegensinnig zueinander und jeweils unter einem Winkel δ'', welcher zwischen 25° und 35°, insbesondere etwa 30°, beträgt, zu einer Normalen auf die Mittelachse m. Die Bereiche der Wellenberge 35, 36 mit der größten Amplitude R sind jeweils von einem gerade und parallel zur Mittelachse m verlaufenden Abschnitt 35b und 36b gebildet, dessen Länge das 1,0- bis 3,0-Fache der Amplitude R, die maximal 2mm aufweist, beträgt. An die Wellenberge 35, 36 schließt jeweils ein gerader, entlang der Mittelachse m verlaufender Abschnitt 37, 38 an, dessen Länge mindestens der Größe der Amplitude R entspricht. Zwischen den einzelnen Abschnitten 33, 34, 35b, 36b, 37, 38 und den jeweiligen Flanken 35a, 36a sind Übergangsbereiche in Form von Rundungen vorgesehen, wobei der Rundungsradius r maximal der Größe der Amplitude R entspricht, sein kleinster Wert beträgt dem 0,25-Fachen von R. Abweichend von der gezeigten Ausführung kann die Mittelachse m eine leicht gebogen verlaufende Mittellinie sein. Ein erfindungsgemäßer Einschnitt 25 wird derart angeführt, dass er abwechselnd Wellenberge 35, 36, zumindest einen Wellenberg 35 und einen Wellenberg 36, aufweist.

Erfindungsgemäß ausgeführte Einschnitte weisen vorzugsweise mehrere aufeinander folgende Wellenberge 35, 36, wie beschrieben, auf, bei der in Fig. 3 gezeigten Ausführung sind jeweils drei Wellenberge 35 und drei Wellenberge 36 vorgesehen. In Folge der speziellen geschwungenen Ausgestaltung weist ein erfindungsgemäßer Einschnitt 25 eine wesentlich höhere Einschnittlänge und damit auch eine wesentlich höhere Griffkantenlänge auf als herkömmlich ausgeführte, beispielsweise zickzackförmig verlaufende Einschnitte. In den geraden Abschnitten 35b, 36b, 37, 38 kann sich der Einschnitt 25 leichter öffnen als beispielsweise ein wellenförmiger oder zickzackförmiger Einschnitt. In diese Abschnitte 35b, 36b, 37, 38 kann Schnee gut eindringen, wodurch die Schnee- Schnee-Reibung verbessert wird.

Darüber hinaus weisen erfindungsgemäß ausgeführte Einschnitte 25 hohe Queranteile für eine gute Schneeseitenführung auf. Die Einschnitte 25 werden bevorzugt mit einer Erstreckung im Wesentlichen in Laufstreifenquerrichtung angeordnet, um die Schneetraktion des Laufstreifens zu verbessern. Die höhere Quersteifigkeit der mit solchen Einschnitten 25 versehenen Profilblöcke wirkt sich zudem positiv auf das Trockenhandling aus. Gemäß Fig. 3 ausgeführte Einschnitte können ebenfalls in beliebig ausgeführten Laufstreifen und in beliebigen Profilelementen vorgesehen sein.

### Bezugsziffernliste

- 1: Laufstreifen
- 2: Umfangsnut
- 3: Schulterblockreihe
- 3a: Block
- 4: Blockreihe
- 4a: Block
- 4b: Einbuchtung
- 5: Umfangsnut
- 6, 6': Quernuten
- 6'a: rampenförmige Anhebung
- 7: Quernuten
- 8: Einschnitt
- 9: Einschnitt
- 10: Blockreihen
- 10a: Blöcke
- 11: Blockreihen
- 11a: Blöcke
- 12: Blockreihen
- 12a: Blöcke
- 14: Umfangsnuten
- 14a: Umfangsabschnitte
- 14b: Umfangsabschnitte
- 14c: Verbindungsabschnitt
- 14d: Verbindungsabschnitt
- 15: Umfangsnuten
- 15a: Abschnitte
- 15b: Abschnitte
- 16, 16': Quernut
- 17, 17': Quernut
- 18: Quernut
- 19: Quernut
- 20: Anhebung
- 20a: Einschnitt
- 20b: Plateau
- 21: Anhebung
- 21a: Einschnitt
- 22: Anhebung
- 22a: Einschnitt
- 22b: Plateau
- 23: Anhebung
- 24: Einschnitte
- 25: Einschnitte
- 26: Einschnitte
- 27: Einschnittabschnitt
- 28: Einschnittabschnitt
- 29: Grundabschnitt
- 30: Verbindungsflanke
- 31: Verbindungsflanke
- 33: Endabschnitte
- 34: Endabschnitte
- 35: Wellenberg
- 35a: Flanken
- 35b: Abschnitt
- 36: Wellenberg
- 36a: Flanken
- 36b: Abschnitt
- 37: Abschnitt
- 38: Abschnitt

- α: Winkel
- α': Winkel
- β: Winkel
- γ: Winkel
- δ: Winkel
- δ': Winkel
- δ": Winkel

- A: Außenabschnitt
- I: Innenabschnitt

## Patentansprüche

1. Fahrzeugluftreifen für den Einsatz unter winterlichen Fahrbedingungen mit einem Laufstreifen (1), welcher sich aus einem bei am Fahrzeug montierten Reifen fahrzeugaußenseitig gelegenen Außenabschnitt (A) und einem Innenabschnitt (I) zusammensetzt, welche Abschnitte (A, I) sich strukturell voneinander unterscheiden, wobei der Innenabschnitt (I) einen größeren Teil der Breite (B) des Laufstreifens (1) in der Bodenaufstandsfläche einnimmt als der Außenabschnitt (A) und von diesem durch eine in Umfangsrichtung umlaufende Umfangsnut (2) getrennt ist, wobei im Laufstreifenaußenabschnitt (A) und im Laufstreifeninnenabschnitt (I) zumindest je eine weitere, in Umfangsrichtung umlaufende Umfangsnut (5, 14, 15) verläuft, wobei die Umfangsnuten (2, 5, 14, 15) Profilblockreihen (3, 4, 10, 11, 12) voneinander trennen, und wobei die breiteste Umfangsnut (14) im Innenabschnitt (I) verläuft, wobei zumindest die breiteste Umfangsnut (14) in Umfangsrichtung verlaufende, gerade Abschnitte (14a, 14b) aufweist, die in den axialen Richtungen abwechselnd gegeneinander um bis zur Hälfte ihrer Breite versetzt sind,
**dadurch gekennzeichnet,**
**dass** die geraden Abschnitte (14a, 14b) über vergleichsweise kurze Verbindungsabschnitte (14c, 14d) miteinander verbunden sind, welche gegenüber der Umfangsrichtung unter einem spitzen Winkel (α') geneigt sind, wobei die axial nach außen geneigt verlaufenden Verbindungsabschnitte (14c) überwiegend von Profilblockflanken begrenzt sind, die der Umfangsrichtung zugeordnet sind, und wobei jeweils die Schnittstellen zwischen den Begrenzungen des Verbindungsabschnittes (14c) und jenen des angrenzenden geraden Abschnittes (14a, 14b) in Umfangsrichtung gegeneinander derart versetzt sind, dass die Verbindungsabschnitte (14c) keine gegenüber der Breite der geraden Abschnitte (14a, 14b) reduzierte Breite aufweisen.

2. Fahrzeugluftreifen nach Anspruch 1, **dadurch gekennzeichnet, dass** die im Innenabschnitt (I) des Laufstreifens der schulterseitigen Blockreihe (12) benachbarte Umfangsnut (15) in Umfangsrichtung einen wellenförmigen Verlauf aufweist.

3. Fahrzeugluftreifen nach Anspruch 1 oder 2, **dadurch gekennzeichnet, dass** die im Laufstreifenmittelbereich verlaufenden Umfangsnuten (2, 14) breiter sind als die den Schulterblockreihen (3, 12) benachbart verlaufenden Umfangsnuten (5, 15), wobei das Verhältnis der Breiten dieser Umfangsnuten (2, 5; 14, 15) in jedem Laufstreifenabschnitt (A, I) zwischen 1 : 1,25 bis 1: 1,4 beträgt.

4. Fahrzeugluftreifen nach einem der Ansprüche 1 bis 3, **dadurch gekennzeichnet, dass** Verbindungsabschnitte (14d) der breitesten Umfangsnut (14) zu Quernuten (17) weisen, welche zwischen den Blöcken (1 1a) der laufstreifenaußenseitig an die Umfangsnut (14) angrenzenden Blockreihe (11) verlaufen.

5. Fahrzeugluftreifen nach einem der Ansprüche 1 bis 4, **dadurch gekennzeichnet, dass** jeweils zwei Blöcken (12a) der Schulterblockreihe (12) ein Block (11a) der benachbarten mittleren Blockreihe (11) zugeordnet ist, wobei zumindest jede zweite Quernut (17) aus dieser Blockreihe (11) in einer Quernut (18) der laufstreifeninnenseitig angrenzenden zentralen Blockreihe (10) Fortsetzung findet.

6. Fahrzeigluftreifen nach einem der Ansprüche 1 bis 5, **dadurch gekennzeichnet, dass** in den miteinander fluchtend angeordneten Quernuten (17, 18) der mittleren und der zentralen Blockreihe (10, 11) rampenförmige Anhebungen (20, 21) vorgesehen sind, welche jeweils an den einen benachbarten Block (11a, 10a) angebunden sind und vom anderen benachbarten Block (11a, 10a) durch einen Einschnitt (20a, 21a) getrennt sind.

7. Fahrzeugluftreifen nach Anspruch 6, **dadurch gekennzeichnet, dass** die Einschnitte (20a, 21 a) eine Breite von 0,5 mm bis 1 mm aufweisen und bis auf Profiltiefe reichen.

8. Fahrzeugluftreifen nach Anspruch 6 oder 7, **dadurch gekennzeichnet, dass** sich die Höhe der rampenförmigen Anhebungen (20, 21) in axialer Richtung nach außen zu verringert, wobei die rampenförmigen Anhebungen (21) in den Quernuten (17) der mittleren Blockreihe (11) eine Fortsetzung der rampenförmigen Anhebungen (20) in den Quernuten (18) der zentralen Blockreihe (10) darstellen.

9. Fahrzeugluftreifen nach einem der Ansprüche 6 bis 8, **dadurch gekennzeichnet, dass** die rampenförmigen Anhebungen (20) in den Quernuten (18) der zentralen Blockreihe (10) ihre größte Höhe in einem vom Nutgrund gemessenen Abstand (a) von 50% bis 70% der Profiltiefe (T) aufweisen.

10. Fahrzeugluftreifen nach einem der Ansprüche 6 bis 8, **dadurch gekennzeichnet, dass** die rampenförmigen Anhebungen (21) in den Quernuten (17) der mittleren Blockreihe (11) am Grund der Quernuten (17) enden bzw. auslaufen.

## Claims

1. Pneumatic vehicle tyre for use in winter driving conditions, with a tread rubber (1), which is made up of an outer portion (A), situated on the outer side of the vehicle when the tyre is fitted on the vehicle, and an inner portion (I), which portions (A, I) differ from each other structurally, the inner portion (I) taking up a greater part of the width (B) of the tread rubber (1) in the ground contact area than the outer portion (A) and being separated from the latter by a circumferential groove (2) running around in the circumferential direction, at least one further circumferential groove (5, 14, 15) that runs around in the circumferential direction respectively running in the tread rubber outer portion (A) and in the tread rubber inner portion (I), the circumferential grooves (2, 5, 14, 15) separating rows of profile blocks (3, 4, 10, 11, 12) from one another, and the widest circumferential groove (14) running in the inner portion (I), at least the widest circumferential groove (14) having straight portions (14a, 14b) that run in the circumferential direction and are offset alternately with respect to one another in the axial directions by up to half their width, **characterized in that** the straight portions (14a, 14b) are connected to one another by way of comparatively short connecting portions (14c, 14d), which are inclined at an acute angle (α') with respect to the circumferential direction, the connecting portions (14c) that run in an axially outwardly inclined manner being predominantly delimited by profile block flanks that are assigned to the circumferential direction, and the intersections between the delimitations of the connecting portion (14c) and those of the adjacent straight portion (14a, 14b) being respectively offset with respect to one another in the circumferential direction in such a way that the connecting portions (14c) do not have a reduced width with respect to the width of the straight portions (14a, 14b).

2. Pneumatic vehicle tyre according to Claim 1, **characterized in that** the circumferential groove (15) neighbouring the row of blocks (12) on the shoulder side in the inner portion (I) of the tread rubber follows a wavy path in the circumferential direction.

3. Pneumatic vehicle tyre according to Claim 1 or 2, **characterized in that** the circumferential grooves (2, 14) running in the middle region of the tread rubber are wider than the circumferential grooves (5, 15) running alongside the rows of shoulder blocks (3, 12), the ratio of the widths of these circumferential grooves (2, 5; 14, 15) in each tread rubber portion (A, I) being between 1:1.25 and 1:1.4.

4. Pneumatic vehicle tyre according to one of Claims 1 to 3, **characterized in that** connecting portions (14d) of the widest circumferential groove (14) point towards transverse grooves (17), which run between the blocks (11a) of the row of blocks (11) adjacent to the circumferential groove (14) on the outer side of the tread rubber.

5. Pneumatic vehicle tyre according to one of Claims 1 to 4, **characterized in that** two blocks (12a) respectively of the row of shoulder blocks (12) are assigned a block (11a) of the neighbouring middle row of blocks (11), at least every second transverse groove (17) from this row of blocks (11) finding a continuation in a transverse groove (18) of the central row of blocks (10) that is adjacent on the inner side of the tread rubber.

6. Pneumatic vehicle tyre according to one of Claims 1 to 5, **characterized in that** ramp-shaped elevations (20, 21), which are respectively adjoined to the one neighbouring block (11a, 10a) and are separated from the other neighbouring block (11a, 10a) by a sipe (20a, 21a), are provided in the transverse grooves (17, 18) of the middle and central rows of blocks (10, 11) that are arranged in line with one another.

7. Pneumatic vehicle tyre according to Claim 6, **characterized in that** the sipes (20a, 21a) have a width of 0.5 mm to 1 mm and reach to the profile depth.

8. Pneumatic vehicle tyre according to Claim 6 or 7, **characterized in that** the height of the ramp-shaped elevations (20, 21) decreases outwardly in the axial direction, the ramp-shaped elevations (21) in the transverse grooves (17) of the middle row of blocks (11) representing a continuation of the ramp-shaped elevations (20) in the transverse grooves (18) of the central row of blocks (10).

9. Pneumatic vehicle tyre according to one of Claims 6 to 8, **characterized in that** the ramp-shaped elevations (20) in the transverse grooves (18) of the central row of blocks (10) have their greatest height at a distance (a) measured from the base of the groove of 50% to 70% of the profile depth (T).

10. Pneumatic vehicle tyre according to one of Claims 6 to 8, **characterized in that** the ramp-shaped elevations (21) in the transverse grooves (17) of the middle row of blocks (11) end or run out at the base of the transverse grooves (17).

## Revendications

1. Bandage pneumatique pour roue de véhicule, destiné à être utilisé en conditions hivernales de roulage,
présentant une bande de roulement (1) constituée d'une partie extérieure (A) située du côté extérieur du véhicule lorsque le bandage de roue est monté sur le véhicule et d'une partie intérieure (I),
les parties (A, I) étant structurellement différentes l'une de l'autre, la partie intérieure (I) occupant une plus grande partie de la largeur (B) de la surface d'appui au sol de la bande de roulement (1) que la partie extérieure (A) et étant séparée de cette dernière par une rainure (2) s'étendant dans la direction périphérique,
au moins une autre rainure (5, 14, 15) s'étendant dans la direction périphérique étant prévue respectivement dans la partie extérieure (A) de la bande de roulement et dans la partie intérieure (I) de la bande de roulement,
les rainures périphériques (2, 5, 14, 15) séparant les unes des autres des rangées (3, 4, 10, 11, 12) de blocs profilés,
la plus large rainure périphérique (14) étant prévue dans la partie intérieure (I),
au moins la plus large rainure périphérique (14) présentant des parties rectilignes (14a, 14b) s'étendant dans la direction périphérique et décalées mutuellement en alternance dans les directions axiales sur jusque la moitié de leur largeur,
**caractérisé en ce que**
les parties rectilignes (14a, 14b) sont reliées l'une à l'autre par des parties de liaison (14c, 14d) relativement courtes inclinées sous un angle aigu (α') par rapport à la direction périphérique,
les parties de liaison (14c) qui s'étendent axialement en étant inclinées vers l'extérieur étant principalement délimitées par des flancs de blocs profilés associés à la direction périphérique,
les points de concours entre les limites de la partie de liaison (14c) et celles (14a, 14b) adjacentes dans la direction périphérique étant décalées mutuellement de telle sorte que la largeur des parties de liaison (14c) ne soit pas réduite par rapport à la largeur des parties rectilignes (14a, 14b).

2. Bandage pneumatique pour roue de véhicule selon la revendication 1, **caractérisé en ce que** la rainure périphérique (15) voisine de la rangée (12) de blocs située du côté de l'épaulement de la partie intérieure (I) de la bande de roulement présente une forme ondulée dans la direction périphérique.

3. Bandage pneumatique pour roue de véhicule selon les revendications 1 ou 2, **caractérisé en ce que** les rainures périphériques (2, 14) qui s'étendent dans la partie centrale de la bande de roulement sont plus larges que les rainures périphériques (5, 15) qui s'étendent au voisinage des rangées (3, 12) de blocs d'épaulement, le rapport entre les largeurs de ces rainures périphériques (2, 5; 14, 15) de chaque partie (A, I) de la bande de roulement étant compris entre 1:1,25 et 1:1,4.

4. Bandage pneumatique pour roue de véhicule selon l'une des revendications 1 à 3, **caractérisé en ce que** des parties de liaison (14d) de la plus large rainure périphérique (14) sont orientées vers des rainures transversales (17) qui s'étendent entre les blocs (11a) de la rangée (11) de blocs adjacente à la rainure périphérique (14) du côté extérieur de la bande de roulement.

5. Bandage pneumatique pour roue de véhicule selon l'une des revendications 1 à 4, **caractérisé en ce que** deux blocs (12a) de la rangée (12) de blocs d'épaulement sont associés à un bloc (11a) de la rangée (11) médiane voisine de blocs, au moins une rainure transversale (17) sur deux se prolongeant depuis cette rangée (11) de blocs en une rainure transversale (18) de la rangée centrale (10) de blocs adjacente au côté intérieur de la bande de roulement.

6. Bandage pneumatique pour roue de véhicule selon l'une des revendications 1 à 5, **caractérisé en ce que** des rehaussements (20, 21) en forme de rampe sont prévus dans les rainures transversales (17, 18), disposées en alignement mutuel, de la rangée médiane et de la rangée centrale (10, 11) de blocs, sont reliés chacun à l'un des blocs (11a, 10a) voisins et sont séparés de l'autre bloc (11a, 10a) voisin par une entaille (20a, 21a).

7. Bandage pneumatique pour roue de véhicule selon la revendication 6, **caractérisé en ce que** les entailles (20a, 21a) présentent une largeur de 0,5 mm à 1 mm et s'étendent sur la profondeur du profil.

8. Bandage pneumatique pour roue de véhicule selon les revendications 6 ou 7, **caractérisé en ce que** la hauteur des rehaussements (20, 21) en forme de rampe diminue dans la direction axiale orientée vers l'extérieur, les rehaussements (21) en forme de rampe des rainures transversales (17) de la rangée médiane (11) de blocs constituant un prolongement des rehaussements (20) en forme de rampe des rainures transversales (18) de la rangée centrale (10) de blocs.

9. Bandage pneumatique pour roue de véhicule selon l'une des revendications 6 à 8, **caractérisé en ce que** les rehaussements (20) en forme de rampe des rainures transversales (18) de la rangée centrale (10) de blocs présentent leur plus grande hauteur à une distance (a), mesurée depuis le fond de la rainure, qui correspond à 50 % à 70 % de la profondeur (T) du profil.

10. Bandage pneumatique pour roue de véhicule selon l'une des revendications 6 à 8, **caractérisé en ce que** les rehaussements (21) des rainures transversales (17) de la rangée médiane (11) de blocs s'étendent de manière à se terminer au fond des rainures transversales (17).
